# EUROPEAN PATENT APPLICATION

(11) **EP 4 769 080 A1**
(43) Date of publication of application: **01.07.2026**
(21) Application number: 25225597.1
(22) Date of filing: 19.12.2025
(51) Int. Cl.: G06F 3/01

(54) **INFORMATION PROCESSING APPARATUS, CONTROL METHOD THEREFOR, AND COMPUTER PROGRAM**

(30) Priority: 27.12.2024 JP 2024232678
(71) Applicant: Canon Kabushiki Kaisha, Tokyo, 146-8501 (JP)
(72) Inventor: RA, Rina, Ohta-ku, Tokyo 146-8501 (JP)
(74) Representative: TBK

(57) **Abstract**

An information processing apparatus (100) includes a generation unit (101), a display control unit (101), a first acquisition unit (104), a second acquisition unit (105), and a processing unit (101). The generation unit (101) generates a virtual image including a movable virtual object. The display control unit (101) controls display of the virtual image. The first acquisition unit (104) acquires first information regarding a first part of a user. The second acquisition unit (105) acquires second information regarding a second part of the user. The processing unit (101) performs a first movement process to move the virtual object based on the first information and a second movement process to move the virtual object based on the second information. The processing unit (101) switches between the first movement process and the second movement process based on the acquisition status of the first information or the acquisition status of the second information.

## Description

### TECHNICAL FIELD

The present disclosure relates to an information processing apparatus, a method for controlling the information processing apparatus, and a computer program.

### BACKGROUND

In recent years, technologies related to extended reality (XR), including virtual reality (VR), mixed reality (MR), and augmented reality (AR), have become increasingly widespread. XR typically employs a head-mounted display (HMD). In video see-through MR utilizing an HMD, an image is generated in which a virtual object created by computer graphics (CG) is superimposed on an image of the real space captured by a camera (imager) mounted on the HMD. A user wearing the HMD can interact with the virtual object in the generated image as if actually touching and moving it with their own hands. To enable such interaction, it is necessary to detect an operation tool, such as the user's hand or a controller held by the user's hand, which serves as a reference for moving the virtual object. If the operation tool cannot be detected, an alternative to the operation tool may be presented to the user, or the user may be prompted to change the movement of their own hand. For example, Japanese Patent No. 6522825 discloses a configuration for notifying the user of the cause of an event in which an operation object (virtual object) cannot be moved. Japanese Patent No. 6720283 discloses a configuration for changing the operating state of system processing when an object present within a predetermined detection range is no longer detected.

For example, it is assumed here that while a user is grasping and moving a virtual object with their hand, the HMD becomes unable to detect the user's hand due to hand shaking, a change in the camera's angle of view, or the like, resulting in the virtual object being left behind without following the hand. In the configuration disclosed in Japanese Patent No. 6522825, it is possible to notify the user of the cause of an event in which the virtual object cannot be moved. However, each time such a notification is made, the user may have to reach out again to grasp the virtual object that has been left behind. In the configuration disclosed in Japanese Patent No. 6720283, the virtual object can be made to continue following by changing the operating state of system processing. However, the change in the operating state of the system processing cannot be controlled by the user. Therefore, it may be difficult for the user to pause or resume the operation of moving the virtual object at their intended timing.

### SUMMARY

Embodiments described herein are directed to technology that enables stable movement of a virtual object when the object is moved.

The present disclosure in its first aspect provides an information processing apparatus as specified in claim 1. Optional features are specified in claims 2 to 14.

The present disclosure in its second aspect provides a control method as specified in claim 15.

The present disclosure in its third aspect provides a computer program as specified in claim 16.

Features of the present disclosure will become apparent from the following description of embodiments with reference to the attached drawings. The following description of embodiments is described by way of example.

### BRIEF DESCRIPTION OF THE DRAWINGS

Fig. 1 is a block diagram illustrating an example of the hardware configuration of an information processing apparatus according to a first embodiment.
Fig. 2A is a diagram sequentially illustrating temporal changes in a mixed reality image displayed on a display unit of an HMD.
Fig. 2B is a diagram sequentially illustrating temporal changes in a mixed reality image displayed on the display unit of the HMD.
Fig. 2C is a diagram sequentially illustrating temporal changes in a mixed reality image displayed on the display unit of the HMD.
Fig. 2D is a diagram sequentially illustrating temporal changes in a mixed reality image displayed on the display unit of the HMD.
Fig. 2E is a diagram sequentially illustrating temporal changes in a mixed reality image displayed on the display unit of the HMD.
Fig. 2F is a diagram sequentially illustrating temporal changes in a mixed reality image displayed on the display unit of the HMD.
Fig. 3A illustrates an x-y plane view and a y-z plane view corresponding to Fig. 2A.
Fig. 3B illustrates an x-y plane view and a y-z plane view corresponding to Fig. 2B.
Fig. 3C illustrates an x-y plane view and a y-z plane view corresponding to Fig. 2C.
Fig. 3D illustrates an x-y plane view and a y-z plane view corresponding to Fig. 2D.
Fig. 3E illustrates an x-y plane view and a y-z plane view corresponding to Fig. 2E.
Fig. 3F illustrates an x-y plane view and a y-z plane view corresponding to Fig. 2F.
Fig. 4A is a diagram sequentially illustrating temporal changes in information stored in a RAM of the HMD.
Fig. 4B is a diagram sequentially illustrating temporal changes in information stored in the RAM of the HMD.
Fig. 4C is a diagram sequentially illustrating temporal changes in information stored in the RAM of the HMD.
Fig. 4D is a diagram sequentially illustrating temporal changes in information stored in the RAM of the HMD.
Fig. 4E is a diagram sequentially illustrating temporal changes in information stored in the RAM of the HMD.
Fig. 5 is a timing chart illustrating the execution timing of processes performed in the HMD.
Fig. 6 is a flowchart illustrating a process performed by the HMD.
Fig. 7 is a flowchart illustrating the detailed process of step S604, which is a subroutine in the flowchart illustrated in Fig. 6.
Fig. 8 is a flowchart illustrating the detailed process of step S606, which is a subroutine in the flowchart illustrated in Fig. 6.
Fig. 9 is a flowchart illustrating the detailed process of step S607, which is a subroutine in the flowchart illustrated in Fig. 6.
Fig. 10 is a flowchart illustrating a process (selected object determination process) performed by the HMD according to a second embodiment.
Fig. 11 is a flowchart illustrating a process (movement mode determination process) performed by the HMD.

### DESCRIPTION OF THE EMBODIMENTS

Example embodiments will be described in detail with reference to the accompanying drawings. It should be noted that the following embodiments are provided for illustrative purposes only and are not intended to limit the scope of the disclosure. While multiple features are described in the embodiments, the disclosure is not limited to embodiments that incorporate all such features, and various combinations of these features may be contemplated as appropriate. Furthermore, in the drawings, like reference numerals designate like or corresponding parts, and duplicative descriptions thereof are omitted to avoid redundancy.

### First Embodiment

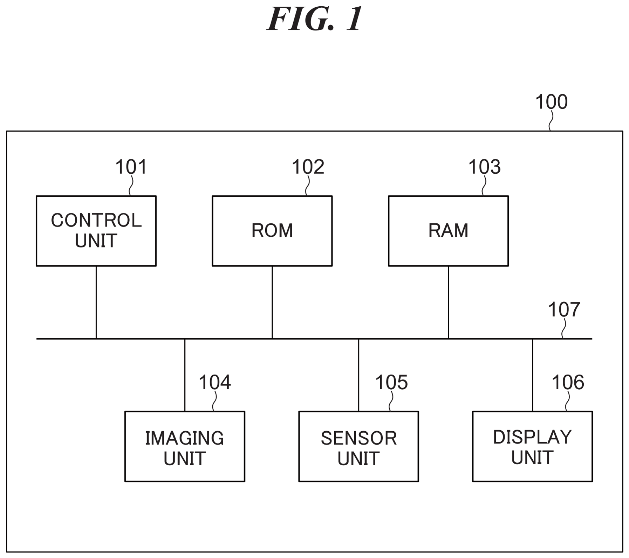

A first embodiment will be described below with reference to Figs. 1 to 9. Fig. 1 is a block diagram illustrating an example of the hardware configuration of a head-mounted display (HMD) as an information processing apparatus according to the first embodiment. Although the information processing apparatus of this embodiment is described as an HMD, it is not limited thereto. For example, the information processing apparatus may be other image displayable devices such as a handheld display, a notebook personal computer, a tablet device, a smartphone, or a digital camera. The information processing apparatus may also be a desktop personal computer. In this case, the desktop personal computer is used in a state of being communicatively connected to an image displayable device mentioned above. As illustrated in Fig. 1, an HMD 100 includes a control unit 101, a ROM 102, a RAM 103, an imaging unit 104, a sensor unit 105, and a display unit 106, which are communicatively connected to one another via a system bus 107.

The control unit 101 is a computer including at least one processor such as a CPU, an MPU, or a GPU. The control unit 101 also functions as a generation unit that generates a virtual image of a virtual space. The virtual image (virtual space) includes, for example, a virtual object that can be moved within the virtual image. In this embodiment, the virtual object may be a cube, as will be described later; however, it is not limited thereto and may be, for example, a sphere or the like. The ROM 102 stores various programs and the like. The programs are not particularly limited and may include, for example, programs that cause the control unit 101 to perform each of steps (control method for the information processing apparatus) described later. When the main power (not illustrated) of the HMD 100 is turned on, the control unit 101 reads a program from the ROM 102 and starts control of various hardware components communicatively connected via the system bus 107. The ROM 102 is not particularly limited and may be, for example, a nonvolatile memory such as a flash memory that can be electrically erased and reprogrammed. The RAM 103 is used as a work area for programs executed by the control unit 101. The RAM 103 is not particularly limited and may be, for example, a volatile memory including semiconductor devices such as a DRAM.

The imaging unit 104 includes, for example, an optical lens unit, an optical system configured to control an aperture, zoom, focus, and the like, and an image sensor configured to convert light (image) introduced through the optical lens unit into an electrical image signal. The image sensor is not particularly limited and may be, for example, a CMOS image sensor with a complementary metal-oxide semiconductor (CMOS), a CCD image sensor with a charge-coupled device (CCD), or the like. The imaging unit 104 is a stereo camera including two cameras arranged on the left and right sides of the HMD 100. A color image captured by this stereo camera is output to the system bus 107 as an image signal. The image signal is subjected to various image processing by the control unit 101 and is stored in the RAM 103 as left and right background images, i.e., real-world image data. The control unit 101 can generate a mixed reality image by combining or synthesizing the real-world image (real image) and the virtual image. The sensor unit 105 includes various sensors. These sensors are not particularly limited and may include, for example, an acceleration sensor for detecting changes in the position of the HMD 100, a gyro sensor for detecting changes in the orientation of the HMD 100, and a geomagnetic sensor for detecting the heading of the HMD 100. The display unit 106 includes display devices such as two displays arranged on the left and right sides of the HMD 100, and the mixed reality image generated by the control unit 101 is displayed thereon. This enables stereoscopic viewing of the mixed reality image. The mixed reality image is displayed on the display unit 106 under the control of the control unit 101. Thus, in this embodiment, the control unit 101 also functions as a display control unit that controls the display of the mixed reality image on the display unit 106. Alternatively, in the HMD 100, a portion functioning as the display control unit may be provided separately from the control unit 101.

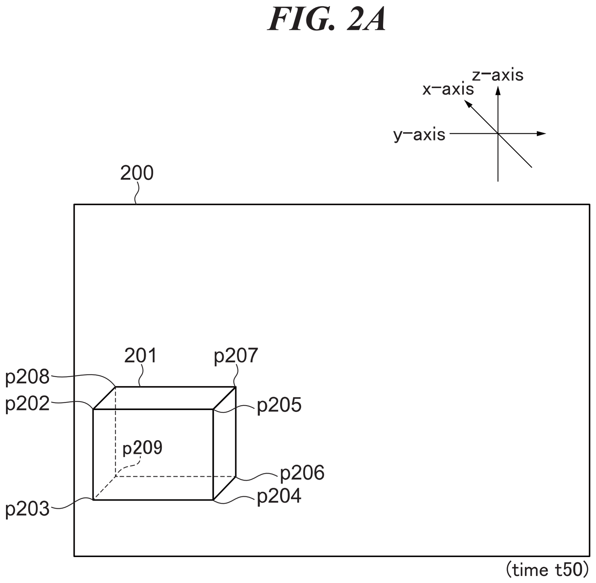

Figs. 2A to 2F are diagrams sequentially illustrating temporal changes in a mixed reality image displayed on the display unit of the HMD. Note that the display unit 106 displays solid line portions in Figs. 2A to 2F, while dashed line portions are not displayed. In this embodiment, a three-dimensional coordinate system (left-handed coordinate system) having an x-axis, a y-axis, and a z-axis is set in the mixed reality images illustrated in Figs. 2A to 2F, and the unit of each coordinate is "cm." Furthermore, in this embodiment, unless otherwise specified as a spatial coordinate system, the coordinates are defined in the world spatial coordinate system, which serves as the reference for the entire virtual space. When the coordinate system is based on a specific object, that is, when it is a local spatial coordinate system, the specific local spatial coordinate system is specified.

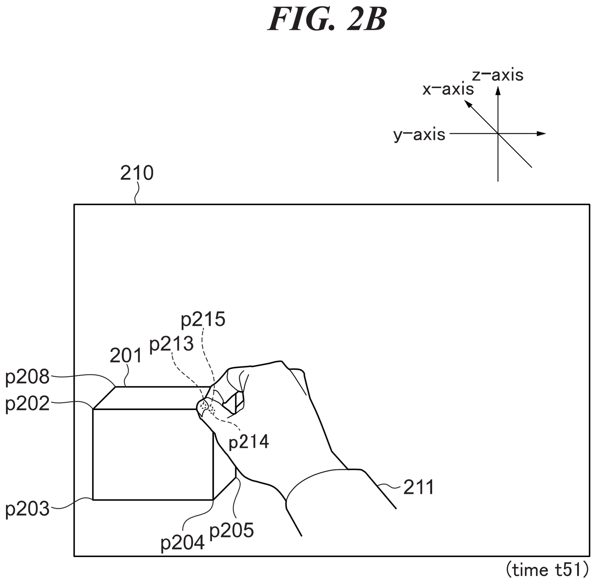

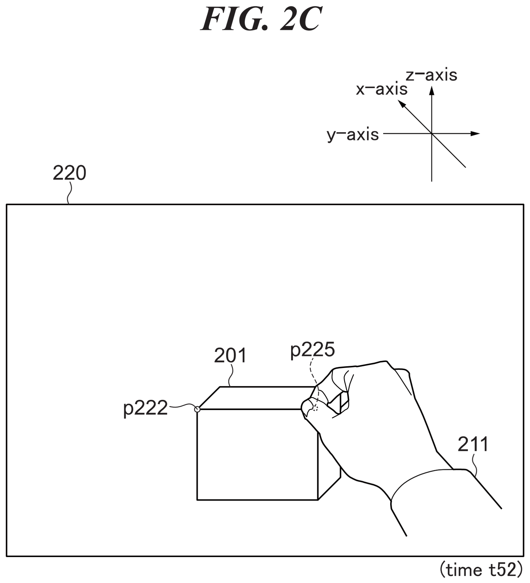

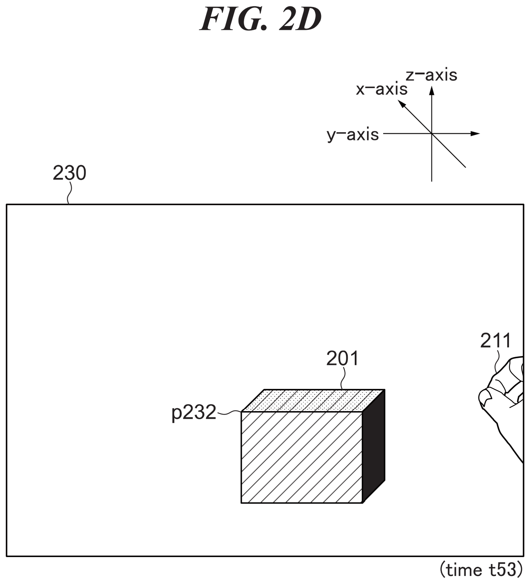

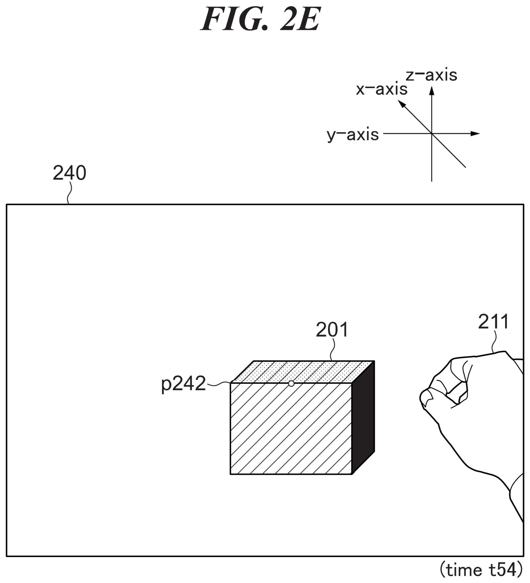

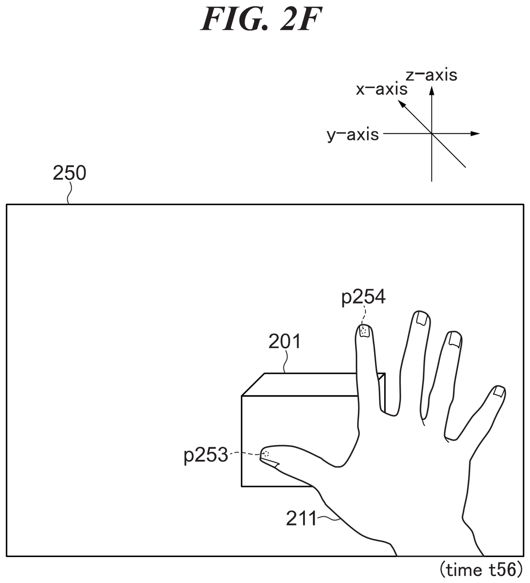

A mixed reality image 200 illustrated in Fig. 2A is an image processed by the control unit 101 at time t = t50 (described later). A mixed reality image 210 illustrated in Fig. 2B is an image processed by the control unit 101 at time t = t51 (described later). A mixed reality image 220 illustrated in Fig. 2C is an image processed by the control unit 101 at time t = t52 (described later). A mixed reality image 230 illustrated in Fig. 2D is an image processed by the control unit 101 at time t = t53 (described later). A mixed reality image 240 illustrated in Fig. 2E is an image processed by the control unit 101 at time t = t54 (described later). A mixed reality image 250 illustrated in Fig. 2F is an image processed by the control unit 101 at time t = t56 (described later). The mixed reality images 200 to 250 include a virtual object 201. The virtual object 201 is, for example, a cube generated based on computer graphics (CG) data such as video footage or three-dimensional model data. The virtual object 201, which is a cube, has eight vertices. In the mixed reality image 200, i.e., at time t = t50, the eight vertices are displayed as points p202 to p209, with coordinates as follows: p202 = (x1, y1, z2) = (3, 5, 12); p203 = (x1, y1, z1) = (3, 5, 5); p204 = (x1, y2, z1) = (3, 15, 5); p205 = (x1, y2, z2) = (3, 15, 12); p206 = (x2, y2, z1) = (9, 15, 5); p207 = (x2, y2, z2) = (9, 15, 12); p208 = (x2, y1, z2) = (9, 5, 12); and p209 = (x2, y1, z1) = (9, 5, 5).

The mixed reality images 210 to 250 include a hand 211 of a user wearing the HMD 100 on the head and viewing the mixed reality images 210 to 250. The hand 211 includes a point p213 indicating the tip of the thumb and a point p214 indicating the tip of the index finger. In the mixed reality image 210, i.e., at time t = t51, these points are located as follows: p213 = (x3, y3, z3) = (3.5, 13.5, 10.5) and p214 = (x5, y5, z5) = (4.5, 14.5, 11.5). The hand 211 further includes a point p215 calculated based on the points p213 and p214. The point p215 serves as a hand-finger movement reference point when the hand 211 is moved. In this embodiment, the point p215 is defined as the midpoint between the points p213 and p214. In the mixed reality image 210, the point p215 is located as follows: p215 = (x4, y4, z4) = (4, 14, 11). While the hand-finger movement reference point in this embodiment is defined as the midpoint between the tip of the thumb and the tip of the index finger, it is not limited thereto. For example, either the tip of the thumb or the tip of the index finger alone may also serve as the reference point. Thus, the HMD 100 can acquire position information regarding the position of the user's hand and fingers captured by the imaging unit 104. In this embodiment, the position information of the hand and fingers (a first part, which is a predetermined part of the user) is referred to as first information, and the imaging unit 104 functions as a first acquisition unit that acquires the first information. Note that the position information of the hand and fingers can also be acquired through hand tracking. In addition, when the thumb and the index finger are in contact with each other, for example, they form a pinching shape for pinching a virtual object. When the thumb and the index finger move apart from the pinching shape, they form a separated shape different from the pinching shape.

In the mixed reality image 220 illustrated in Fig. 2C, a point p222 of the virtual object 201 corresponds to the point p202 at time t = t52, and is located at (x6, y6, z6) = (12, 22, 12). A point p225 is the hand-finger movement reference point at time t = t52, and is located at (x7, y7, z7) = (4, 31, 11). In the mixed reality image 230 illustrated in Fig. 2D, a point p232 of the virtual object 201 corresponds to the point p202 at time t = t53, and is located at (x8, y8, z8) = (5, 29, 11). In the mixed reality image 240 illustrated in Fig. 2E, a point p242 of the virtual object 201 corresponds to the point p202 at time t = t54, and is located at (x9, y9, z9) = (approximately 8, 20, approximately 18). In the mixed reality image 250 illustrated in Fig. 2F, a point p253 of the hand 211 indicates the tip of the thumb at time t = t56, and is located at (x10, y10, z10) = (1, 16, 2). Additionally, a point p254 indicates the tip of the index finger at time t = t56, and is located at (x11, y11, z11) = (3, 30, 15).

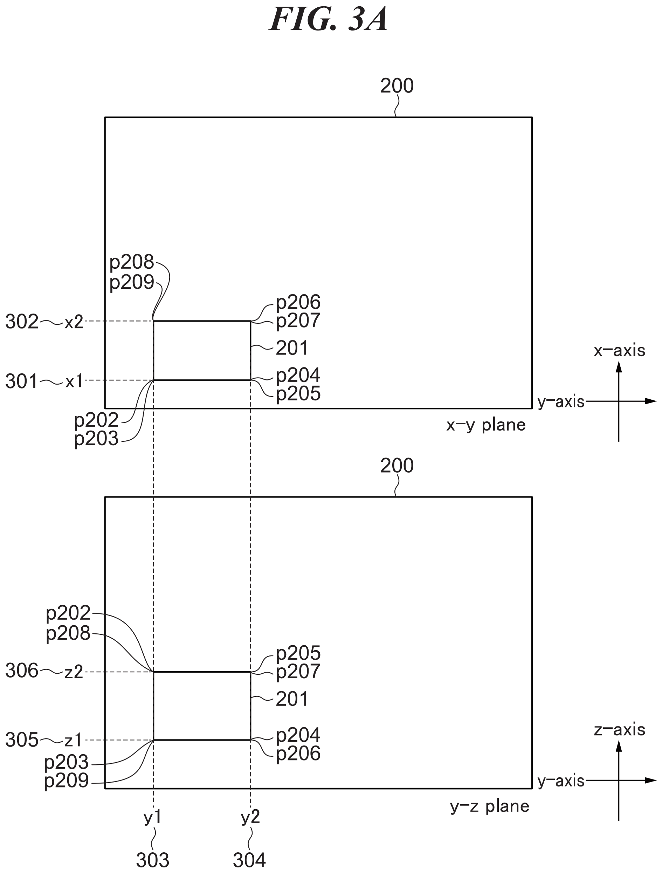

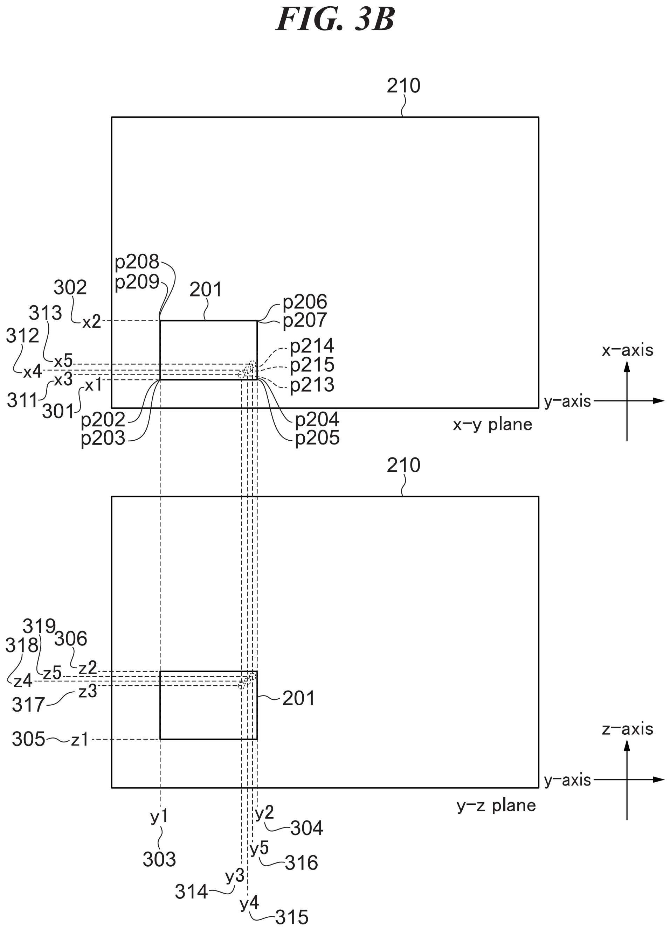

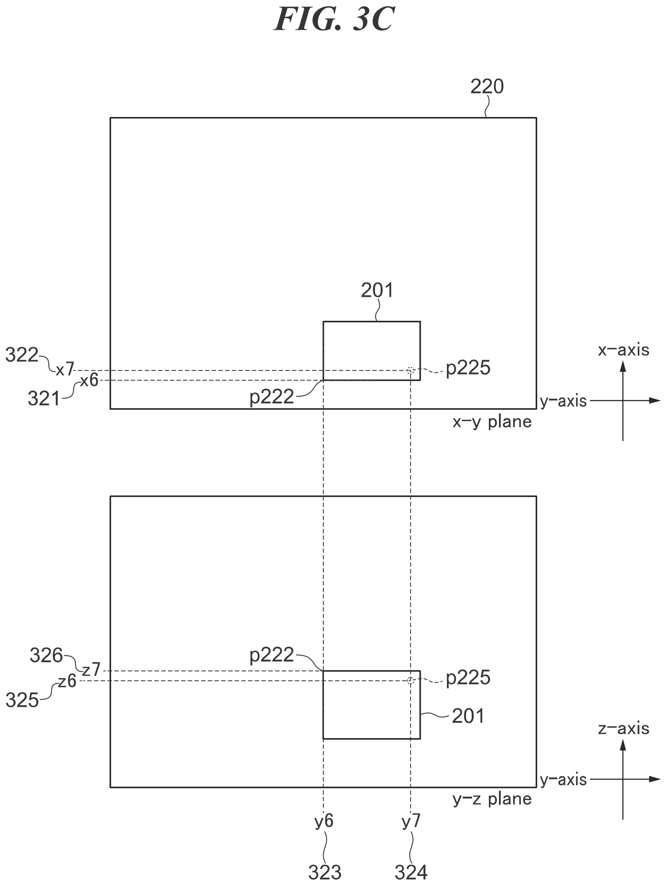

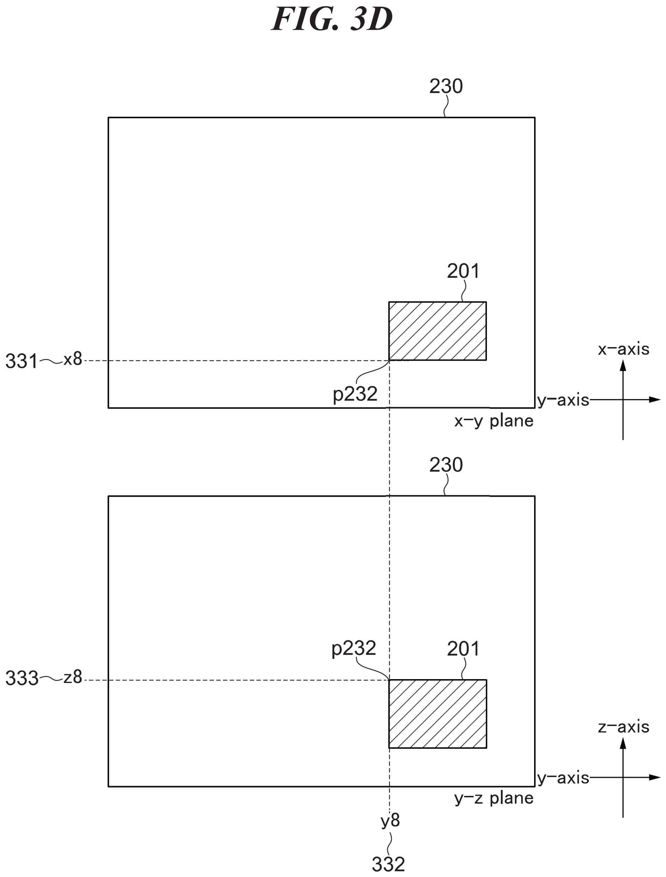

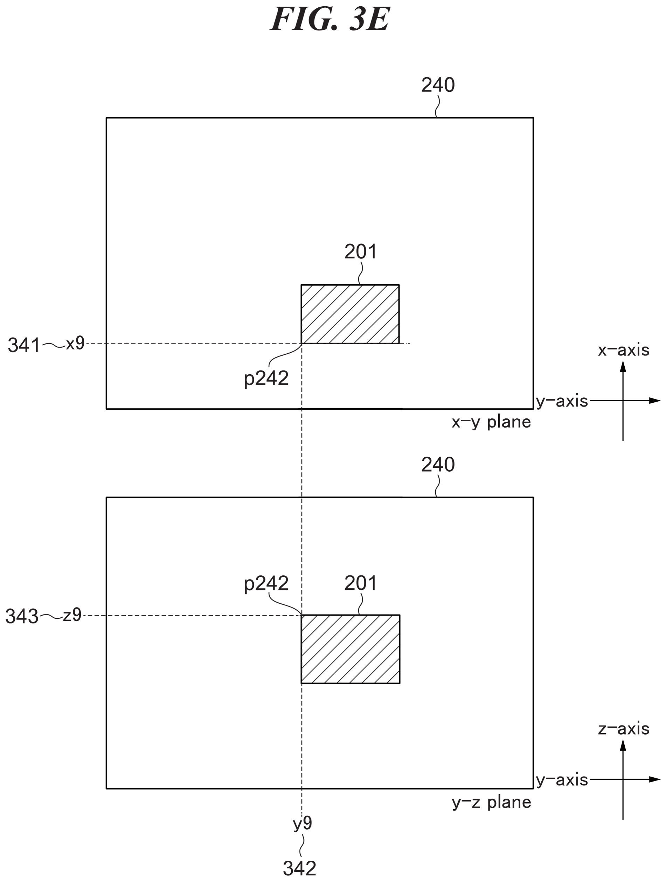

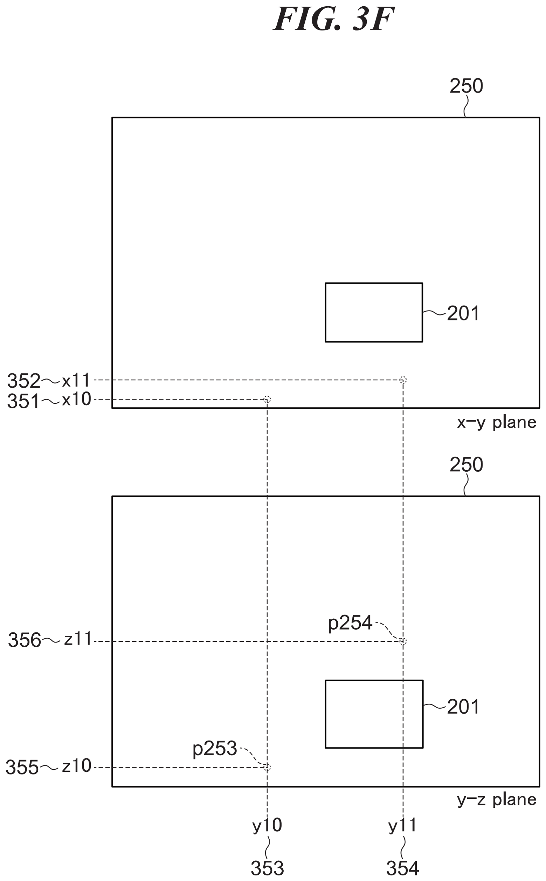

Fig. 3A illustrates an x-y plane view and a y-z plane view corresponding to Fig. 2A. Fig. 3B illustrates an x-y plane view and a y-z plane view corresponding to Fig. 2B. Fig. 3C illustrates an x-y plane view and a y-z plane view corresponding to Fig. 2C. Fig. 3D illustrates an x-y plane view and a y-z plane view corresponding to Fig. 2D. Fig. 3E illustrates an x-y plane view and a y-z plane view corresponding to Fig. 2E. Fig. 3F illustrates an x-y plane view and a y-z plane view corresponding to Fig. 2F. Coordinates 301, 302, 311, 312, 313, 321, 322, 331, 341, 351, and 352 in Figs. 3A to 3F correspond to the x coordinates in Figs. 2A to 2F. The coordinate 301 corresponds to the x-coordinate (x1). The coordinate 302 corresponds to the x-coordinate (x2). The coordinate 311 corresponds to the x-coordinate (x3). The coordinate 312 corresponds to the x-coordinate (x4). The coordinate 313 corresponds to the x-coordinate (x5). The coordinate 321 corresponds to the x-coordinate (x6). The coordinate 322 corresponds to the x-coordinate (x7). The coordinate 331 corresponds to the x-coordinate (x8). The coordinate 341 corresponds to the x-coordinate (x9). The coordinate 351 corresponds to the x-coordinate (x10). The coordinate 352 corresponds to the x-coordinate (x11).

Coordinates 303, 304, 314, 315, 316, 323, 324, 332, 342, 353, and 354 in Figs. 3A to 3F correspond to the y-coordinates in Figs. 2A to 2F. The coordinate 303 corresponds to the y-coordinate (y1). The coordinate 304 corresponds to the y-coordinate (y2). The coordinate 314 corresponds to the y-coordinate (y3). The coordinate 315 corresponds to the y-coordinate (y4). The coordinate 316 corresponds to the y-coordinate (y5). The coordinate 323 corresponds to the y-coordinate (y6). The coordinate 324 corresponds to the y-coordinate (y7). The coordinate 332 corresponds to the y-coordinate (y8). The coordinate 342 corresponds to the y-coordinate (y9). The coordinate 353 corresponds to the y-coordinate (y10). The coordinate 354 corresponds to the y-coordinate (y11).

Coordinates 305, 306, 317, 318, 319, 325, 326, 333, 343, 355, and 356 in Figs. 3A to 3F correspond to the z-coordinates in Figs. 2A to 2F. The coordinate 305 corresponds to the z-coordinate (z1). The coordinate 306 corresponds to the z-coordinate (z2). The coordinate 317 corresponds to the z-coordinate (z3). The coordinate 318 corresponds to the z-coordinate (z4). The coordinate 319 corresponds to the z-coordinate (z5). The coordinate 325 corresponds to the z-coordinate (z6). The coordinate 326 corresponds to the z-coordinate (z7). The coordinate 333 corresponds to the z-coordinate (z8). The coordinate 343 corresponds to the z-coordinate (z9). The coordinate 355 corresponds to the z-coordinate (z10). The coordinate 356 corresponds to the z-coordinate (z11). The x-coordinates are as follows: x1 = 3, x2 = 5, x3 = 3.5, x4 = 4, x5 = 4.5, x6 = 12, x7 = 4, x8 = 5, x9 = approximately 8, x10 = 1, and x11 = 3. The y-coordinates are as follows: y1 = 5, y2 = 15, y3 = 13.5, y4 = 14, y5 = 14.5, y6 = 22, y7 = 31, y8 = 29, y9 = 20, y10 = 16, and y11 = 40. The z-coordinates are as follows: z1 = 5, z2 = 12, z3 = 10.5, z4 = 11, z5 = 11.5, z6 = 11, z7 = 12, z8 = 11, z9 = approximately 18, z10 = 2, and z11 = 15.

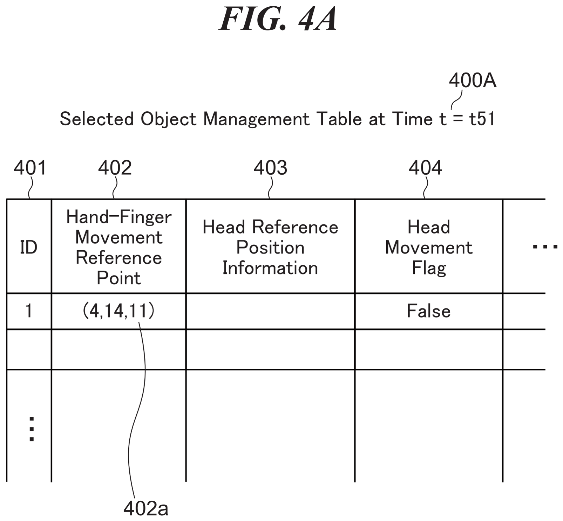

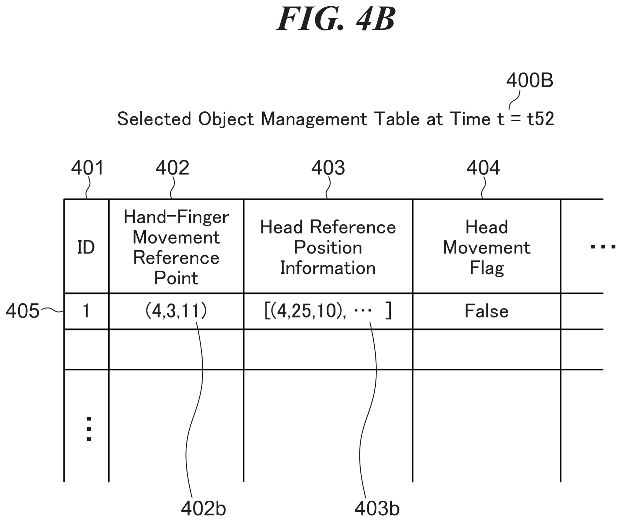

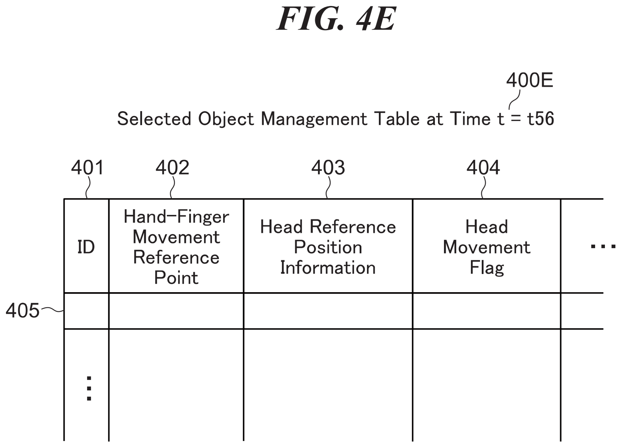

Figs. 4A to 4E are diagrams sequentially illustrating temporal changes in the information stored in the RAM of the HMD. Selected object management tables 400A to 400E illustrated in Figs. 4A to 4E are management tables to manage information on the virtual object 201 selected as an object to be moved (movement target) in a mixed reality image (virtual image). The selected object management table 400A represents the table at time t = t51. The selected object management table 400B represents the table at time t = t52. The selected object management table 400C represents the table at time t = t53. The selected object management table 400D represents the table at time t = t54. The selected object management table 400E represents the table at time t = t56. The selected object management tables 400A to 400E include, but are not limited to, items such as an ID 401, a hand-finger movement reference point 402, head reference position information 403, and a head movement flag 404. The ID 401 is identification information for identifying the virtual object 201 selected as an object to be moved in the mixed reality image. The hand-finger movement reference point 402 indicates the coordinates of a reference point used when the virtual object 201 is moved together with the hand 211 in the mixed reality image. As described above, in this embodiment, the hand-finger movement reference point 402 is defined as the midpoint between the tip of the thumb and the tip of the index finger. The HMD 100 can perform a first movement process of moving the virtual object 201 in the mixed reality image based on the position information of this midpoint, namely, the position information of the hand and fingers (first information). Data 402a in Fig. 4A indicates the coordinates of the hand-finger movement reference point 402 with the ID 401 of "1." Similarly, data 402b in Fig. 4B indicates the coordinates of the hand-finger movement reference point 402 with the ID 401 of "1."

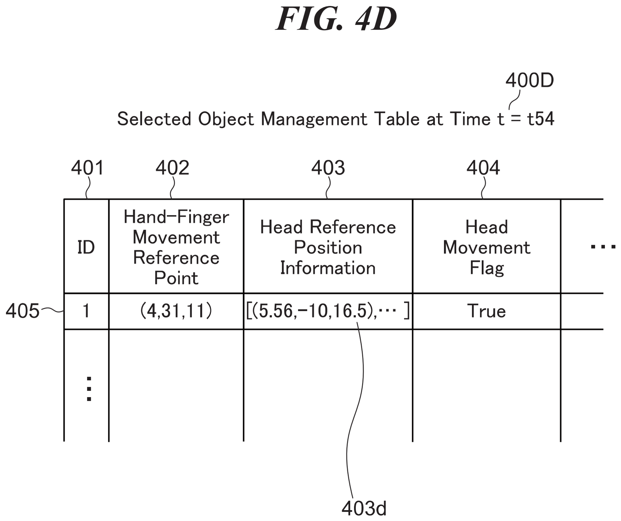

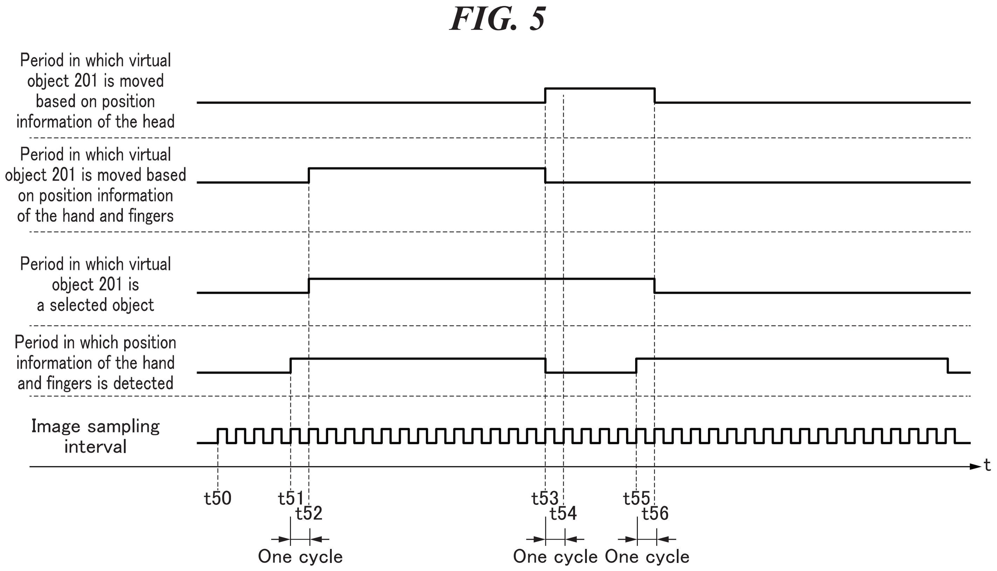

The head reference position information 403 indicates the coordinates of each vertex of the virtual object 201 in a local spatial coordinate system (head local spatial coordinates) in which a predetermined position of the user's head serves as the reference point, i.e., the origin. Data 403b in Fig. 4B indicates the coordinates of the head reference position information 403 with the ID 401 of "1." Similarly, data 403d in Fig. 4D indicates the coordinates of the head reference position information 403 with the ID 401 of "1." The control unit 101 calculates the coordinates of each point in the local spatial coordinate system based on the information acquired by the sensor unit 105 and the world spatial coordinate information of the virtual object 201. The coordinates of each vertex of the virtual object 201 are those of the previous cycle preceding the time of this coordinate calculation. This cycle will be described later with reference to Fig. 5. The HMD 100 can acquire position information regarding a predetermined position of the user's head. In this embodiment, the position information of the head (a second part, which is a predetermined part different from the first part of the user) is referred to as second information, and the sensor unit 105 functions as a second acquisition unit that acquires the second information. The HMD 100 can then perform a second movement process of moving the virtual object 201 in the mixed reality image based on the position information of the head (second information). Therefore, it is not necessary to acquire the head reference position information 403 until the second movement process is performed.

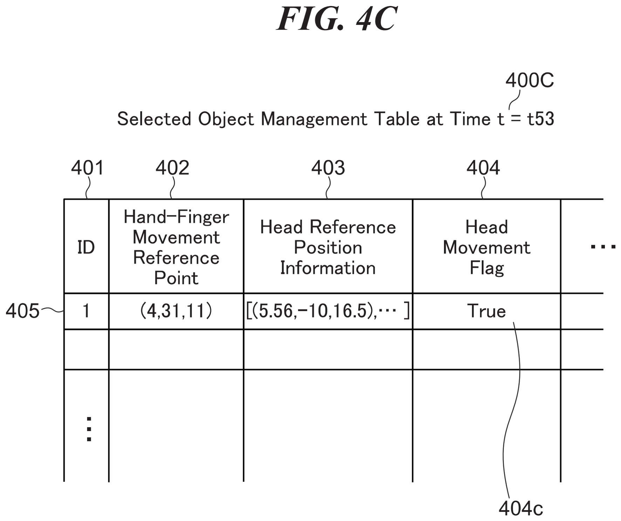

The head movement flag 404 is flag data used to switch between the first movement process and the second movement process. The process of switching between the first movement process and the second movement process is performed by the control unit 101. Thus, in this embodiment, the control unit 101 also functions as a processing unit that switches between the first movement process and the second movement process. Alternatively, in the HMD 100, a portion functioning as the processing unit may be provided separately from the control unit 101. When the first movement process is performed, the head movement flag 404 is set to "False," and when the second movement process is performed, the head movement flag 404 is set to "True." Data 404c in Fig. 4C is the flag data of the head movement flag 404 with the ID 401 of "1." In addition, the selected object management tables 400A to 400E may include, as an item, selected object element data. The selected object element data is a column used when the virtual object 201 is registered in the selected object management table.

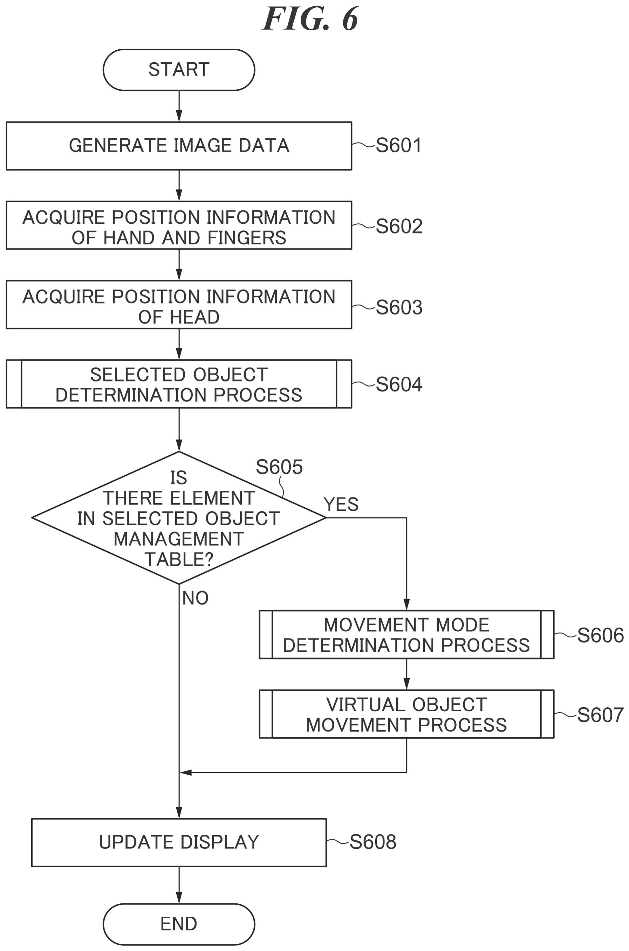

Fig. 5 is a timing chart illustrating the execution timing of processes performed in the HMD. One cycle in the timing chart of Fig. 5 corresponds to the cycle of execution of a program based on the flowchart illustrated in Fig. 6, and it may correspond, for example, to the image sampling interval at which images are sampled. Times t50 to t56 are the times at which various processes are performed based on the image sampling interval. Times t50 to t56 will be described later.

As described above, the HMD 100 can perform the first movement process based on the position information of the hand and fingers (first information), i.e., while acquiring the position information of the hand and fingers. The HMD 100 can also perform the second movement process based on the position information of the head (second information), i.e., while acquiring the position information of the head. In the HMD 100, the first movement process is performed with priority over the second movement process. For example, if the extent or degree of acquisition of the first information decreases while the first movement process is being performed, there is a risk that the first movement process may be interrupted. Accordingly, the HMD 100 is configured to be capable of switching to the second movement process in such cases. The configuration and operation will be described below. In this embodiment, the term "movement based on a reference point" refers to movement using coordinate space transformation through an application programming interface (API) such as Unity. Such movement is known in the art. In movement implemented using coordinate spaces in Unity, for example, when the virtual object follows the hand, its local coordinates are determined based on the local coordinates of a hand-tracking object and transformed into world spatial coordinates. When the virtual object follows the head, its world coordinates are calculated based on the camera coordinate space, and it is moved accordingly.

Fig. 6 is a flowchart illustrating a process performed by the HMD. The program based on the flowchart illustrated in Fig. 6 is executed by the control unit 101 of the HMD 100 by controlling other hardware components of the HMD 100. The control unit 101 repeatedly performs the process of this flowchart according to the cycle described with reference to Fig. 5. As illustrated in Fig. 6, in step S601, the control unit 101 controls the imaging unit 104 to acquire an image signal. The control unit 101 then generates left and right background images, i.e., real-world image data, based on the image signal. This background image data is stored in the RAM 103. At this time, the control unit 101 also generates a virtual image containing a virtual object and creates a mixed reality image by combining or synthesizing the virtual image with the real-world image (real image). The mixed reality image data is stored in the RAM 103. Additionally, the mixed reality image is displayed on the display unit 106.

In step S602, the control unit 101 detects the user's hand, the tip of each finger, and joint positions of the wrist from the left and right background image data stored in the RAM 103 in step S601. In other words, the control unit 101 acquires the position information of the hand and fingers. The method for detecting the positions of the hand and fingers is not particularly limited and may, for example, employ a trained model or an algorithm based on a known rule-based approach. Specifically, the position of the hand is detected stepwise by first detecting a region in the background image containing the user's hand and then detecting the hand's position again from this region. The result of detecting the positions of the user's hand and the like, i.e., the position information of the hand and fingers, is stored in the RAM 103. If the detection of the user's hand and the like is unsuccessful, information indicating this is stored in the RAM 103.

In step S603, the control unit 101 controls the sensor unit 105 to acquire the orientation information of the HMD 100 as the position information of the user's head. The orientation information of the HMD 100 (position information of the head) is represented by three-dimensional coordinates in the world spatial coordinate system and an angular orientation. Specifically, the orientation information is represented by variables: Position and Rotation. The orientation information of the HMD 100 is stored in the RAM 103.

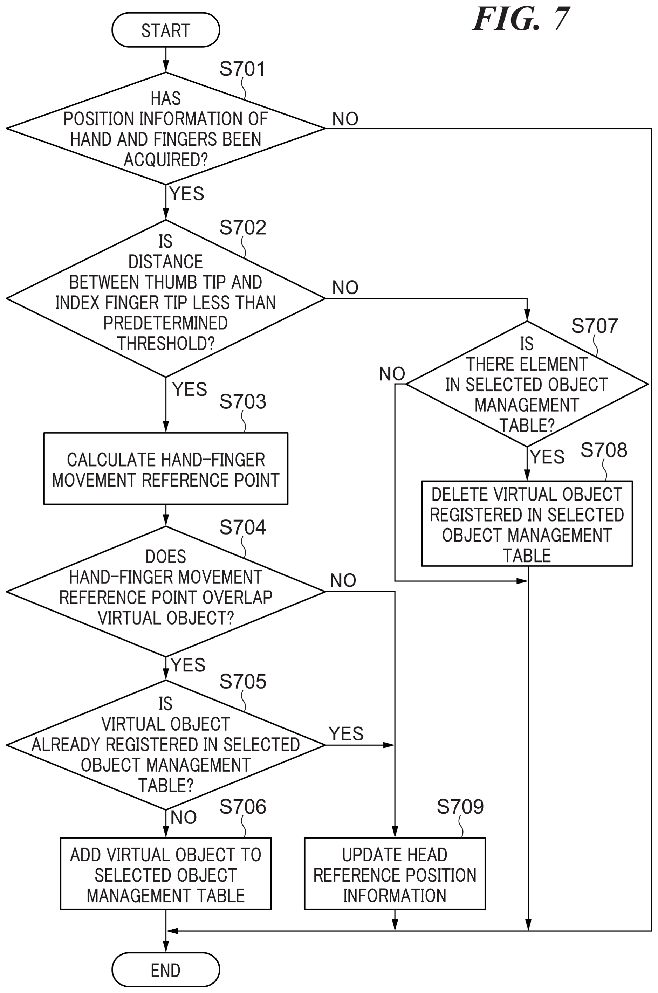

In step S604, the control unit 101 performs a selected object determination process to determine a virtual object in the mixed reality image (virtual image) selected by the user as the virtual object to be moved. The control unit 101 registers the virtual object determined as the virtual object to be moved in the selected object management table described with reference to Figs. 4A to 4E. The detailed process of step S604 will be described later with reference to Fig. 7.

In step S605, the control unit 101 determines whether there is information (element data) regarding the virtual object in the selected object management table. If the control unit 101 determines that the element is present in the selected object management table (YES in step S605), the process proceeds to step S606. On the other hand, if the control unit 101 determines that the element is not present in the selected object management table (NO in step S605), the process proceeds to step S608.

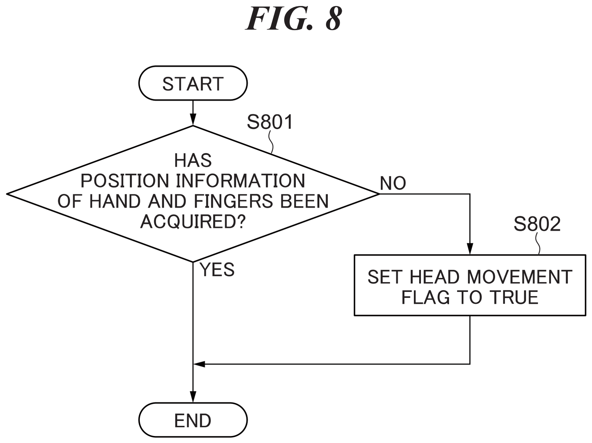

In step S606, the control unit 101 performs a movement mode determination process to determine the movement mode for moving the virtual object registered in the selected object management table. The detailed process of step S606 will be described later with reference to Fig. 8.

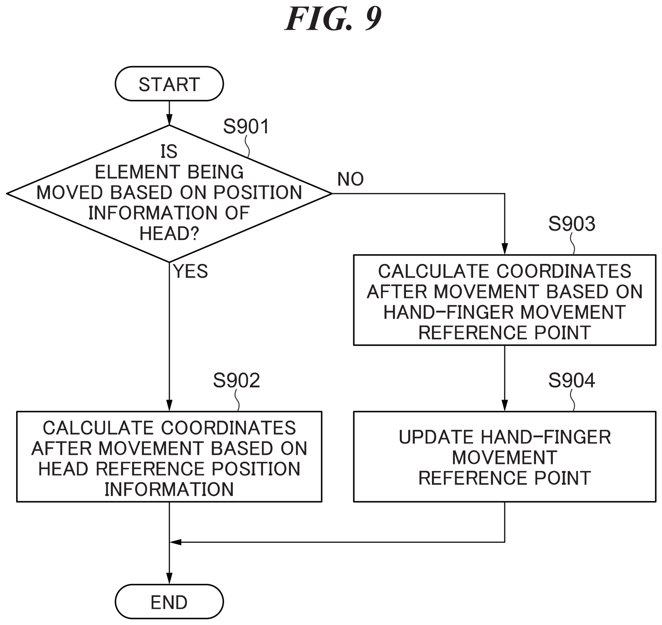

In step S607, the control unit 101 performs a virtual object movement process to move the virtual object using the movement mode determined in step S606. The detailed process of step S607 will be described later with reference to Fig. 9.

In step S608, the control unit 101 generates mixed reality image data in which the virtual object rendered on the virtual image is superimposed on the background image data stored in the RAM 103 in step S601. The control unit 101 then controls the display unit 106 to display this mixed reality image. Upon completion of step S608, the process ends.

Fig. 7 is a flowchart illustrating the detailed process of step S604, which is a subroutine in the flowchart illustrated in Fig. 6. As illustrated in Fig. 7, in step S701, the control unit 101 determines whether the position information of the hand and fingers, stored in the RAM 103 in step S602, has been successfully acquired from the RAM 103. If the control unit 101 determines that the position information of the hand and fingers has been successfully acquired (YES in step S701), the process proceeds to step S702. On the other hand, if the control unit 101 determines that the position information of the hand and fingers has not been successfully acquired (NO in step S701), the process ends. For example, the control unit 101 may determine that the position information of the hand and fingers could not be acquired at time t50 and between times t53 and t54, while it could be acquired between times t51 and t52 and between times t55 and t56.

In step S702, the control unit 101 determines whether the distance between the tip of the thumb and the tip of the index finger is less than a predetermined threshold based on the position information of the hand and fingers determined to have been successfully acquired from the RAM 103 in step S701. If the control unit 101 determines that the distance between the tip of the thumb and the tip of the index finger is less than the predetermined threshold (YES in step S702), the process proceeds to step S703. On the other hand, if the control unit 101 determines that the distance between the tip of the thumb and the tip of the index finger is not less than the predetermined threshold (NO in step S702), the process proceeds to step S707. Here, as an example, the predetermined threshold is assumed to be "2 cm." At time t51, as described above, the coordinates of the tip of the thumb and the tip of the index finger correspond to the point p213 (3.5, 13.5, 10.5) and the point p214 (4.5, 14.5, 11.5), respectively. In this case, the distance between the tip of the thumb and the tip of the index finger is 1.5 cm (< 2 cm). Therefore, the control unit 101 determines that the distance between the tip of the thumb and the tip of the index finger at time t51 is less than the predetermined threshold, and the process proceeds to step S703. At time t56, the coordinates of the tip of the thumb and the tip of the index finger correspond to the point p253 (1, 16, 2) and the point p254 (3, 30, 15), respectively. In this case, the distance between the tip of the thumb and the tip of the index finger is approximately 19.2 cm (> 2 cm). Therefore, the control unit 101 determines that the distance between the tip of the thumb and the tip of the index finger at time t56 is not less than the predetermined threshold, and the process proceeds to step S707.

In step S703, the control unit 101 calculates the hand-finger movement reference point based on the position information of the hand and fingers. The calculation result is stored in the RAM 103. As described above, for example, the hand-finger movement reference point at time t51 corresponds to the point p215 (4, 14, 11).

In step S704, the control unit 101 determines whether the hand-finger movement reference point calculated in step S703 overlaps with a virtual object in the mixed reality image. This determination is made, for example, based on whether the virtual object encompasses the hand-finger movement reference point (coordinates). If the virtual object encompasses the hand-finger movement reference point, it is determined that the reference point overlaps with the virtual object. Conversely, if the virtual object does not encompass the hand-finger movement reference point, it is determined that the reference point does not overlap with the virtual object. This determination is made for all virtual objects placed in the mixed reality image. If the control unit 101 determines that the hand-finger movement reference point overlaps with a virtual object (YES in step S704), the process proceeds to step S705. On the other hand, if the control unit 101 determines that the hand-finger movement reference point does not overlap with any virtual object (NO in step S704), the process proceeds to step S709. For example, at time t51, the minimum and maximum values of the coordinates of the points p202 to p209 of the virtual object 201 are as follows: 3 < x < 9, 5 < y < 15, and 5 < z < 12. In this case, the control unit 101 can determine that the coordinates of the hand-finger movement reference point fall within the range from the minimum to the maximum values of the coordinates of the virtual object 201, and thus the point p215 is encompassed by the virtual object 201.

In step S705, the control unit 101 determines whether the same virtual object (ID) has already been registered in the selected object management table. If the control unit 101 determines that the same virtual object has already been registered (YSE in step S705), the process proceeds to step S709. On the other hand, if the control unit 101 determines that the same virtual object has not been registered (NO in step S705), the process proceeds to step S706.

In step S706, the control unit 101 adds to the selected object management table the virtual object determined to overlap with the hand-finger movement reference point in step S704. For example, the control unit 101 adds the virtual object 201 to the selected object element data of the selected object management table 400A. At this time, the coordinates of the point p215 calculated in step S703 are registered in the hand-finger movement reference point 402 with the ID 401 of "1" (see the data 402a), and the head movement flag 404 is initialized to "False." Upon completion of step S706, the process ends.

In step S707, the control unit 101 determines whether there is an element in the selected object management table. If the control unit 101 determines that there is an element in the selected object management table (YES in step S707), the process proceeds to step S708. On the other hand, if the control unit 101 determines that there is no element in the selected object management table (NO in step S707), the process ends.

In step S708, the control unit 101 deletes the virtual object currently registered in the selected object management table. For example, the control unit 101 deletes the virtual object with the ID 401 of "1" registered at time t51 from the selected object management table at time t56. Upon completion of step S708, the process ends.

In step S709, the control unit 101 updates the head reference position information 403 in the selected object management table based on the position information of the hand and fingers. For example, it is assumed that at time t52, the orientation information of the head is acquired as position [cm] = (-1, 30, 2) and angle [rad] = (0, 0, 0). In this case, since the coordinates of each vertex of the virtual object 201 remain as the result of the movement process applied at time t51, they correspond to the point p212 (3, 5, 12). From this information, the head local spatial coordinates of the point p212 at time t51 are calculated as (4, -25, 10). The coordinates of the other vertices are also calculated in the same manner, and the head reference position information 403 is updated (see the data 403b in Fig. 4B). Additionally, it is assumed that at time t54, the orientation information of the head is acquired as position [cm] = (-1, 30, 2) and angle [rad] = (0, 5, 0). In this case, since the coordinates of each vertex of the virtual object 201 remain as the result of the movement process applied at time t53, they correspond to the point p232 (5, 29, 11). The head local spatial coordinates of the point p232 are then calculated as (5.56, -10, 16.5). Upon completion of step S709, the process ends.

As described above, in the HMD 100, the control unit 101 can determine a virtual object (201) to be moved in the mixed reality image based on the position information of the hand and fingers (first information). Thus, in this embodiment, the control unit 101 also functions as a determination unit that determines a virtual object (201) to be moved. Alternatively, in the HMD 100, a portion functioning as the determination unit may be provided separately from the control unit 101. In addition, in the HMD 100, the virtual object (201) once determined as a movement target may also be changed to another virtual object; in other words, the determination can be canceled. As a result, a desired virtual object can be selected as the movement target.

Fig. 8 is a flowchart illustrating the detailed process of step S606, which is a subroutine in the flowchart illustrated in Fig. 6. As illustrated in Fig. 8, in step S801, the control unit 101 determines whether the position information of the hand and fingers, stored in the RAM 103 in step S602, has been successfully acquired from the RAM 103. If the control unit 101 determines that the position information of the hand and fingers has been successfully acquired (YES in step S801), the process ends. On the other hand, if the control unit 101 determines that the position information of the hand and fingers has not been successfully acquired (NO in step S801), the process proceeds to step S802.

In step S802, the control unit 101 updates the head movement flag 404 by setting it to "True" for the virtual object currently registered in the selected object management table. As described above, when the second movement process is performed, the head movement flag 404 is set to "True" (see the data 404c in Fig. 4C). Upon completion of step S802, the processing ends.

Fig. 9 is a flowchart illustrating the detailed process of step S607, which is a subroutine in the flowchart illustrated in Fig. 6. As illustrated in Fig. 9, in step S901, the control unit 101 determines whether the element in the selected object management table is being moved based on the position information of the head, i.e., whether the second movement process is being performed. This determination is made based on the head movement flag 404 in the selected object management table. For example, when the head movement flag 404 is "True," it is determined that the element is being moved based on the position information of the head, whereas when the head movement flag 404 is "False," it is determined that the element is not being moved based on the position information of the head. If the control unit 101 determines that the element is being moved based on the position information of the head (YES in step S901), the process proceeds to step S902. On the other hand, if the control unit 101 determines that the element is not being moved based on the position information of the head (NO in step S901), the process proceeds to step S903.

In step S902, the control unit 101 calculates (determines) the coordinates of the virtual object after movement (at the movement destination) based on the head reference position information 403 in the selected object management table. The calculation result, i.e., the calculated coordinates, is stored in the RAM 103. The control unit 101 can then move the virtual object to the calculated coordinates, i.e., position the virtual object at the calculated coordinates. The method of calculating the coordinates after movement is not particularly limited. For example, in the orientation information of the head at the time of calculation, world spatial coordinates are first calculated such that they match the head local spatial coordinates of the previous cycle. As an example, consider the case of calculating the coordinates of the point p242 of the virtual object 201 at time t54. In this case, the coordinates before movement correspond to the point p232 (5, 29, 11) at time t53. The control unit 101 acquires (5.56, -10, 16.5) as the head local spatial coordinates from the data 403d in the selected object management table 400D. As described above, the orientation information of the head at time t54 indicates position [cm] = (-1, 30, 2) and angle [rad] = (0, 5, 0). Therefore, the control unit 101 can calculate the world spatial coordinates of the point p242 at time t54 as (approximately 7.977, 20, approximately 17.9526). Alternatively, as with the hand and fingers, a reference point may be calculated, and the virtual object may be translated accordingly. In this case, assuming Unity is used, the coordinates of the virtual object in the camera coordinate space at time t53 are first acquired. Thereafter, at time t54, the coordinates of the virtual object based on the camera coordinate space are converted to world spatial coordinates, thereby enabling the virtual object to be visually perceived as having moved to follow the head position.

In step S903, the control unit 101 calculates the movement amount (movement destination) of the virtual object based on the position information of the hand and fingers. The calculation result is stored in the RAM 103. For example, as described above, the control unit 101 acquires from the RAM 103 the point p225 (4, 31, 11), which corresponds to the hand-finger movement reference point stored in the RAM 103 in step S703 at the time t52. The control unit 101 also acquires the point p215 (4, 14, 11) as the hand-finger movement reference point at time t51 from the selected object management table at the time of performing step S903. The control unit 101 then calculates the position coordinates of each vertex of the virtual object at time t52 as relative coordinates with respect to the coordinates at time t51 based on these acquired coordinates. The relative coordinates are obtained from the point p225 (4, 31, 11) - the point p215 (4, 14, 11), resulting in (0, 17, 0). Accordingly, the control unit 101 calculates, as the position coordinates of each vertex of the virtual object at time t52, the coordinates obtained by translating the virtual object by (x, y, z) = (0, 17, 0). The calculation result is stored in the RAM 103. In this embodiment, the relative coordinates between the hand-finger movement reference point of the previous cycle and that of the current cycle are used; however, the embodiment is not limited thereto. For example, the virtual object may alternatively be linked to a hand object in the virtual space that corresponds to the user's hand movement.

In step S904, the control unit 101 updates the hand-finger movement reference point 402 for the virtual object currently registered in the selected object management table (see the data 402b in Fig. 4B). As a result of this update, the virtual object is moved.

As described above, in the HMD 100, the control unit 101 can determine the extent of acquisition (acquisition status) of the position information of the hand and fingers, i.e., whether the position information of the hand and fingers has been acquired. Thus, in this embodiment, the control unit 101 also functions as a determination unit that determines the extent of acquisition of the position information of the hand and fingers. Alternatively, in the HMD 100, a portion functioning as the determination unit may be provided separately from the control unit 101. When the position information of the hand and fingers can be acquired, the first movement process based on the position information of the hand and fingers is performed. On the other hand, when the position information of the hand and fingers cannot be acquired, the head movement flag 404 is set to "True" such that the position information of the head is acquired, and the second movement process based on the position information of the head is performed. In this case as well, the control unit 101 can determine the extent of acquisition (acquisition status) of the position information of the head.

Additionally, in the HMD 100, the control unit 101 can switch between the first movement process and the second movement process depending on the extent of acquisition of the position information of the hand and fingers or the extent of acquisition of the position information of the head. If, for example, the hand and fingers move out of the detection range of the sensor unit 105 (sensor range) during the first movement process and it is determined that the acquisition status of the position information of the hand and fingers has fallen below a predetermined level, the process is switched to the second movement process. This allows the movement of the virtual object to continue stably even when the position information of the hand and fingers becomes unavailable while the user is moving the virtual object using their hand and fingers. Note that if the movement amount of the hand in video frames is relatively large, i.e., if hand shaking is relatively significant, it may also be determined that the acquisition status of the position information of the hand and fingers has fallen below the predetermined level.

During the second movement process, if it is determined that the position information of the head has changed excessively (e.g., due to excessive head shaking) or that the acquisition status of the position information of the head has fallen below a predetermined level, the second movement process may be stopped. This allows, for example, preventing unnecessary head movements by the user. In addition, if it is determined that the acquisition status of the position information of the hand and fingers has risen to or above the predetermined level during the second movement process after the first movement process, the process may be switched back to the first movement process. This allows the first movement process to be resumed. Since the first movement process was originally performed, it is considered that the first movement process tends to correspond more closely to the user's intention than the second movement process. With the switch back to the first movement process, the virtual object may be positioned at a location on the display unit 106 based on the position information of the hand and fingers. As a result, even if the hand or fingers temporarily move out of the detection range of the sensor unit 105, for example, due to inattention, the virtual object can be positioned at a location corresponding to the user's intention when the user moves their hand and fingers back into the detection range of the sensor unit 105.

The control unit 101 may also make the texture (surface color) of the virtual object during the first movement process different from that of the virtual object during the second movement process. This allows the user to recognize whether the movement of the virtual object is based on the position information of the hand and fingers or on the position information of the head. In this embodiment, the texture of the virtual object during the first movement process corresponds to the state illustrated in Figs. 2B and 2C, and the texture of the virtual object during the second movement process corresponds to the state illustrated in Figs. 2D and 2E. Instead of or in addition to changing the texture, a message may be provided to indicate whether the movement of the virtual object is based on the position information of the hand and fingers or on the position information of the head. Additionally, a sound or vibration may be generated to notify the user of whether the movement is based on the position information of the hand and fingers or on the position information of the head.

Furthermore, when the hand or fingers form the aforementioned pinching shape (first shape), the control unit 101 can perform the first movement process based on the first information. It is assumed here that the shape of the hand and fingers changes from the pinching shape to the aforementioned separated shape while the first movement process is being performed. If the control unit 101 becomes unable to acquire the first information without detecting the separated shape, the process can be switched to the second movement process. If the pinching shape is detected after switching to the second movement process, the control unit 101 can switch back to the first movement process. In this manner, in the HMD 100, if the detection of the pinching shape fails and the pinching shape is subsequently detected again, the first movement process can be resumed. On the other hand, after switching to the second movement process, if the separated shape is detected, the control unit 101 terminates the second movement process without switching back to the first movement process. In this manner, in the HMD 100, if the detection of the pinching shape fails and the separated shape is detected, both the first and second movement processes can be terminated. Furthermore, if the separated shape is detected after switching to the second movement process, the control unit 101 positions the virtual object at the location of the hand or fingers on the display unit 106 and then terminates the second movement process. In this manner, in the HMD 100, if the detection of the pinching shape fails and the separated shape is detected, the position at which the separated shape is detected can be assumed to correspond to the location where the user intended to place the virtual object.

### Second Embodiment

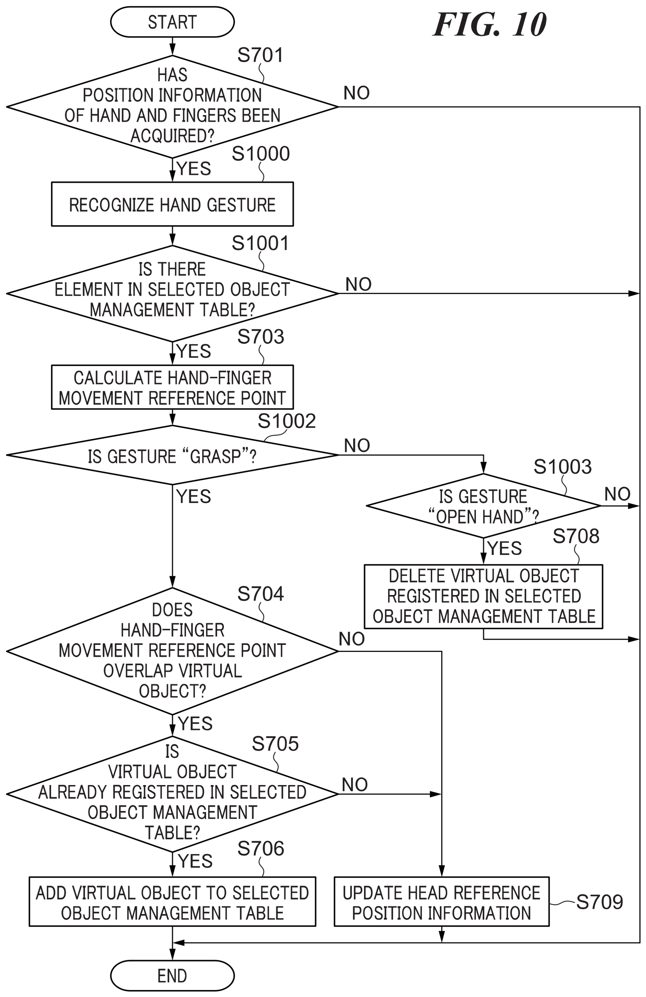

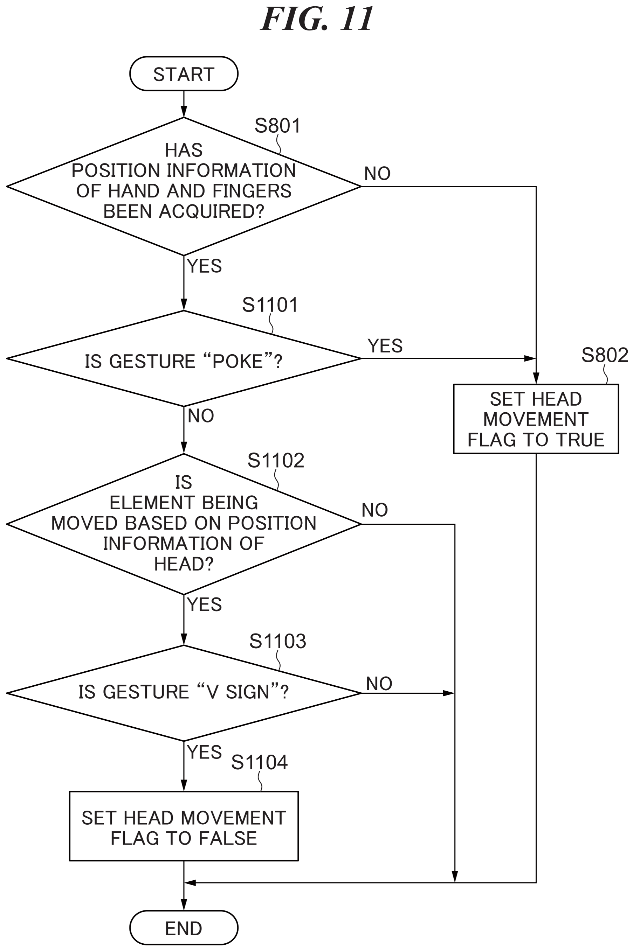

A second embodiment will be described below with reference to Figs. 10 and 11, focusing on differences from the previously described embodiment without repeating the same explanations. In this embodiment, movement information regarding the movement of a gesture is acquired as the first information. Fig. 10 is a flowchart illustrating a process (selected object determination process) performed by the HMD according to the second embodiment. The flowchart illustrated in Fig. 10 is different from the flowchart illustrated in Fig. 7 in that steps S1000 and S1001 are added in place of step S702. In addition, in the flowchart illustrated in Fig. 10, step S1002 is added between step S703 and step S704, and step S1003 is added in place of step S707. As illustrated in Fig. 10, if the control unit 101 determines that the position information of the hand and fingers has been successfully acquired (YES in step S701), the process proceeds to step S1000.

In step S1000, the control unit 101 recognizes a hand gesture. The recognition result is stored in the RAM 103. The method of recognizing a hand gesture is not particularly limited and may, for example, employ a trained model that takes background image data acquired from the imaging unit 104 as input and outputs a hand gesture. Alternatively, the method may be based on shape information of the hand and fingers contained in the position information of the hand and fingers. In this embodiment, the control unit 101 recognizes the shape of the hand 211 at time t51 as the gesture "grasp" or gripping motion (see Fig. 2B). Additionally, the control unit 101 recognizes the shape of the hand 211 at time t56 as the gesture "open hand" (see Fig. 2F). Upon completion of step S1000, the process proceeds to step S1001.

In step S1001, as in step S707, the control unit 101 determines whether there is an element in the selected object management table. If the control unit 101 determines that there is an element in the selected object management table (YES in step S1001), the process proceeds to step S703. On the other hand, if the control unit 101 determines that there is no element in the selected object management table (NO in step S1001), the process ends.

In step S1002, performed after step S703, the control unit 101 determines whether the gesture recognized in step S1000 is "grasp". If the control unit 101 determines that the gesture is "grasp" (YES in step S1002), the process proceeds to step S704, and the subsequent steps are performed in sequence. On the other hand, if the control unit 101 determines that the gesture is not "grasp" (NO in step S1002), the process proceeds to step S1003. In this embodiment, for example, the control unit 101 can determine that the gesture is "grasp" at time t51 (see Fig. 2B).

In step S1003, the control unit 101 determines whether the gesture recognized in step S1000 is "open hand." If the control unit 101 determines that the gesture is "open hand" (YES in step S1003), the process proceeds to step S708. On the other hand, If the control unit 101 determines that the gesture is not "open hand" (NO in step S1003), the process ends. In this embodiment, for example, the control unit 101 can determine that the gesture is "open hand" at time t56 (see Fig. 2F).

As described above, in this embodiment, when it is determined that the gesture is "grasp," i.e., when the movement of the gesture corresponds to a motion of gripping a virtual object, the virtual object can be determined as the virtual object to be moved. In this manner, the virtual object to be moved can be determined based on the gesture.

Fig. 11 is a flowchart illustrating a process (movement mode determination process) performed by the HMD. The flowchart illustrated in Fig. 11 is different from the flowchart illustrated in Fig. 8 in that it includes steps S1101 to S1104 added after step S801. As illustrated in Fig. 11, if the control unit 101 determines that the position information of the hand and fingers has been successfully acquired (YES in step S801), the process proceeds to step S1101.

In step S1101, the control unit 101 determines whether the gesture recognized in step S1000 is "poke." If the control unit 101 determines that the gesture is "poke" (YES in step S1101), the process proceeds to step S802. On the other hand, if the control unit 101 determines that the gesture is not "poke" (NO in step S1101), the process proceeds to step S1102.

In step S1102, as in step S901, the control unit 101 determines whether the element in the selected object management table is being moved based on the position information of the head, i.e., whether the second movement process is being performed. If the control unit 101 determines that the element is being moved based on the position information of the head (YES in step S1102), the process proceeds to step S1103. On the other hand, if the control unit 101 determines that the element is not being moved based on the position information of the head (NO in step S1102), the process ends.

In step S1103, the control unit 101 determines whether the gesture recognized in step S1000 is "V sign." If the control unit 101 determines that the gesture is "V sign" (YES in step S1103), the process proceeds to step S1104. On the other hand, if the control unit 101 determines that the gesture is not "V sign" (NO in step S1103), the process ends.

In step S1104, the control unit 101 updates the head movement flag 404 by setting it to "False" for the virtual object currently registered in the selected object management table. Upon completion of step S1104, the process ends.

As described above, in this embodiment, when a virtual object is to be moved, it is possible to determine whether to use the position information of the hand and fingers or the position information of the head, i.e., to determine the movement mode for moving the virtual object based on a hand gesture. This allows the user to actively switch the movement mode for moving the virtual object depending on the situation while moving the virtual object with their hand and fingers. Although the gestures given in this embodiment include "grasp," "open hand," "poke," and "V sign," they are not limited to these.

The above embodiments can be implemented by a combination of a general-purpose processor and a dedicated processor. Note that the term "processor" as used herein refers to a processor in a broad sense, encompassing both general-purpose processors and dedicated processors. The processing for implementing the embodiments may be performed by a single processor or may be performed through the cooperation of multiple processors physically located apart from each other. In addition, although the first information may include position information of the hand and fingers or gesture information, it is not limited thereto and may alternatively be, for example, position information of the legs or the like. Similarly, although the second information may include position information of the head, it is not limited thereto and may alternatively be, for example, eye movement information, i.e., gaze information.

According to the embodiments described above, the movement of a virtual object can be stably performed.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

The embodiments according to the disclosure include the following items.
Item 1. An information processing apparatus (100), comprising:
   a generation unit (101) configured to generate a virtual image of a virtual space including a movable virtual object;
   a display control unit (101) configured to control display of the virtual image;
   a first acquisition unit (104) configured to acquire first information regarding a first part, the first part being a predetermined part of a user viewing the virtual image displayed under control of the display control unit (101);
   a second acquisition unit (105) configured to acquire second information regarding a second part, the second part being a predetermined part of the user different from the first part; and
   a processing unit (101) configured to perform a first movement process to move the virtual object based on the first information acquired by the first acquisition unit (104) and a second movement process to move the virtual object based on the second information acquired by the second acquisition unit (105), and to switch between the first movement process and the second movement process based on an acquisition status of the first information by the first acquisition unit (104) or an acquisition status of the second information by the second acquisition unit (105).
Item 2. The information processing apparatus (100) according to item 1, wherein
   when performing the first movement process, the processing unit (101) determines a movement destination of the virtual object in the virtual image based on the first information and moves the virtual object to the determined movement destination, and
   when performing the second movement process, the processing unit (101) determines a movement destination of the virtual object in the virtual image based on the second information and positions the virtual object at the determined movement destination.
Item 3. The information processing apparatus (100) according to item 1 or 2, further comprising a determination unit (101) configured to determine the acquisition status of the first information by the first acquisition unit (104) and the acquisition status of the second information by the second acquisition unit (105),
   wherein the processing unit (101) is further configured to switch between the first movement process and the second movement process based on a determination result of the determination unit (101).
Item 4. The information processing apparatus (100) according to item 3, wherein the processing unit (101) switches from the first movement process to the second movement process when the determination unit (101) determines, during the first movement process, that the acquisition status of the first information has fallen below a predetermined level.
Item 5. The information processing apparatus (100) according to item 3 or 4, wherein the processing unit (101) stops the second movement process when the determination unit (101) determines, during the second movement process, that the second information acquired by the second acquisition unit (105) has changed or that the acquisition status of the second information has fallen below a predetermined level.
Item 6. The information processing apparatus (100) according to any one of items 3 to 5, wherein the processing unit (101) switches from the second movement process to the first movement process when the determination unit (101) determines, during the second movement process, that the acquisition status of the first information has risen to or above a predetermined level.
Item 7. The information processing apparatus (100) according to item 6, wherein, when the determination unit (101) determines, during the second movement process, that the acquisition status of the first information has risen to or above the predetermined level, the processing unit (101) positions the virtual object at a location based on the first information upon switching from the second movement process to the first movement process.
Item 8. The information processing apparatus (100) according to any one of items 1 to 7, wherein
   the first acquisition unit (104) acquires, as the first information, position information regarding a position of the user's hand and fingers or movement information regarding a gesture movement, and
   the second acquisition unit (105) acquires, as the second information, position information regarding a position of the user's head.
Item 9. The information processing apparatus (100) according to item 8, wherein the processing unit (101) performs the first movement process with priority over the second movement process.
Item 10. The information processing apparatus (100) according to item 8 or 9, further comprising a determination unit (101) configured to determine a virtual object to be moved in the first movement process based on the first information prior to performing the first movement process.
Item 11. The information processing apparatus (100) according to item 10, wherein
   the determination unit (101) is configured to determine the virtual object as the virtual object to be moved when the first information is the position information and the virtual object encompasses coordinates included in the position information, and
   the determination unit (101) can cancel determination of the virtual object to be moved.
Item 12. The information processing apparatus (100) according to item 10, wherein
   the determination unit (101) is configured to determine the virtual object as the virtual object to be moved when the first information is the movement information and the gesture movement is a movement of grasping the virtual object, and
   the determination unit (101) can cancel determination of the virtual object to be moved.
Item 13. The information processing apparatus (100) according to any one of items 1 to 12, wherein the generation unit (101) is further configured to make a texture of the virtual object during the first movement process different from a texture of the virtual object during the second movement process.
Item 14. The information processing apparatus (100) according to any one of items 1 to 13, wherein
   the generation unit (101) is further configured to generate a mixed reality image by combining the virtual image and a real image, and
   the display control unit (101) is further configured to control display of the mixed reality image.
Item 15. The information processing apparatus (100) according to any one of items 1 to 14, wherein
   the processing unit (101) performs the first movement process based on the first information acquired by the first acquisition unit (104) when the first part forms a first shape, and
   the processing unit (101) switches from the first movement process to the second movement process when the first information becomes unavailable without detecting a second shape of the first part that is different from the first shape during the first movement process.
Item 16. The information processing apparatus (100) according to item 15, wherein the processing unit (101) is further configured, after switching from the first movement process to the second movement process, to:
   switch back to the first movement process when the first shape of the first part is detected; and
   terminate the second movement process without switching back to the first movement process when the second shape of the first part is detected.
Item 17. The information processing apparatus (100) according to item 16, wherein the processing unit (101) is further configured to position the virtual object at a location of the first part and terminate the second movement process when the second shape of the first part is detected after switching from the first movement process to the second movement process.
Item 18. A method for controlling an information processing apparatus, the method comprising:
   generating a virtual image of a virtual space including a movable virtual object;
   displaying the virtual image;
   acquiring first information regarding a first part, the first part being a predetermined part of a user viewing the displayed virtual image;
   acquiring second information regarding a second part, the second part being a predetermined part of the user different from the first part;
   performing a first movement process to move the virtual object based on the first information and a second movement process to move the virtual object based on the second information; and
   switching between the first movement process and the second movement process based on an acquisition status of the first information or an acquisition status of the second information.
Item 19. A computer program comprising instructions which, when the program is executed by a computer, cause the computer to carry out the method of item 18.

## Claims

1. An information processing apparatus (100), comprising:
a generation unit (101) configured to generate a virtual image of a virtual space including a movable virtual object;
a display control unit (101) configured to control display of the virtual image;
a first acquisition unit (104) configured to acquire first information regarding a first part, the first part being a predetermined part of a user viewing the virtual image displayed under control of the display control unit (101);
a second acquisition unit (105) configured to acquire second information regarding a second part, the second part being a predetermined part of the user different from the first part; and
a processing unit (101) configured to perform a first movement process to move the virtual object based on the first information acquired by the first acquisition unit (104) and a second movement process to move the virtual object based on the second information acquired by the second acquisition unit (105), and to switch between the first movement process and the second movement process based on an acquisition status of the first information by the first acquisition unit (104) or an acquisition status of the second information by the second acquisition unit (105).

2. The information processing apparatus (100) according to claim 1, wherein
when performing the first movement process, the processing unit (101) determines a movement destination of the virtual object in the virtual image based on the first information and moves the virtual object to the determined movement destination, and
when performing the second movement process, the processing unit (101) determines a movement destination of the virtual object in the virtual image based on the second information and positions the virtual object at the determined movement destination.

3. The information processing apparatus (100) according to claim 1 or 2, further comprising a determination unit (101) configured to determine the acquisition status of the first information by the first acquisition unit (104) and the acquisition status of the second information by the second acquisition unit (105),
wherein the processing unit (101) is further configured to switch between the first movement process and the second movement process based on a determination result of the determination unit (101).

4. The information processing apparatus (100) according to claim 3, wherein the processing unit (101) switches from the first movement process to the second movement process when the determination unit (101) determines, during the first movement process, that the acquisition status of the first information has fallen below a predetermined level.

5. The information processing apparatus (100) according to claim 3 or 4, wherein the processing unit (101) stops the second movement process when the determination unit (101) determines, during the second movement process, that the second information acquired by the second acquisition unit (105) has changed or that the acquisition status of the second information has fallen below a predetermined level.

6. The information processing apparatus (100) according to any one of claims 3 to 5, wherein the processing unit (101) switches from the second movement process to the first movement process when the determination unit (101) determines, during the second movement process, that the acquisition status of the first information has risen to or above a predetermined level.

7. The information processing apparatus (100) according to claim 6, wherein, when the determination unit (101) determines, during the second movement process, that the acquisition status of the first information has risen to or above the predetermined level, the processing unit (101) positions the virtual object at a location based on the first information upon switching from the second movement process to the first movement process.

8. The information processing apparatus (100) according to any one of claims 1 to 7, wherein
the first acquisition unit (104) acquires, as the first information, position information regarding a position of the user's hand and fingers or movement information regarding a gesture movement, and
the second acquisition unit (105) acquires, as the second information, position information regarding a position of the user's head.

9. The information processing apparatus (100) according to claim 8, wherein the processing unit (101) performs the first movement process with priority over the second movement process.

10. The information processing apparatus (100) according to claim 8 or 9, further comprising a determination unit (101) configured to determine a virtual object to be moved in the first movement process based on the first information prior to performing the first movement process.

11. The information processing apparatus (100) according to claim 10, wherein
the determination unit (101) is configured to determine the virtual object as the virtual object to be moved when the first information is the position information and the virtual object encompasses coordinates included in the position information, and
the determination unit (101) can cancel determination of the virtual object to be moved.

12. The information processing apparatus (100) according to any one of claims 1 to 11, wherein
the processing unit (101) performs the first movement process based on the first information acquired by the first acquisition unit (104) when the first part forms a first shape, and
the processing unit (101) switches from the first movement process to the second movement process when the first information becomes unavailable without detecting a second shape of the first part that is different from the first shape during the first movement process.

13. The information processing apparatus (100) according to claim 12, wherein the processing unit (101) is further configured, after switching from the first movement process to the second movement process, to:
switch back to the first movement process when the first shape of the first part is detected; and
terminate the second movement process without switching back to the first movement process when the second shape of the first part is detected.

14. The information processing apparatus (100) according to claim 13, wherein the processing unit (101) is further configured to position the virtual object at a location of the first part and terminate the second movement process when the second shape of the first part is detected after switching from the first movement process to the second movement process.

15. A method for controlling an information processing apparatus, the method comprising:
generating a virtual image of a virtual space including a movable virtual object;
displaying the virtual image;
acquiring first information regarding a first part, the first part being a predetermined part of a user viewing the displayed virtual image;
acquiring second information regarding a second part, the second part being a predetermined part of the user different from the first part;
performing a first movement process to move the virtual object based on the first information and a second movement process to move the virtual object based on the second information; and
switching between the first movement process and the second movement process based on an acquisition status of the first information or an acquisition status of the second information.

16. A computer program comprising instructions which, when the program is executed by a computer, cause the computer to carry out the method of claim 15.
